# EUROPÄISCHE PATENTSCHRIFT

(11) **EP 2 432 714 B1**
(45) Veröffentlichungstag und Bekanntmachung des Hinweises auf die Patenterteilung: **13.07.2016**
(21) Anmeldenummer: 10722059.2
(22) Anmeldetag: 20.05.2010
(51) Int. Cl.: B65G 39/09

(54) **TROMMELMOTOR MIT INNEN- UND AUßENDECKEL**
DRUM MOTOR HAVING AN INNER AND AN OUTER COVER
TAMBOUR MOTEUR DOTÉ DE COUVERCLES INTÉRIEUR ET EXTÉRIEUR

(30) Priorität: 20.05.2009 DE 102009022250
(43) Veröffentlichungstag der Anmeldung: 28.03.2012
(73) Patentinhaber: Interroll Holding AG, 6592 Sant' Antonino (CH)
(72) Erfinder: LEUVER, Helmut, 41199 Mönchengladbach (DE); HEINEN, Frank, 52428 Jülich (DE); PRIEFERT, Martin, 41844 Wegberg (DE)
(74) Vertreter: Eisenführ Speiser
(86) Internationale Anmeldenummer: PCT/EP2010/056969
(87) Internationale Veröffentlichungsnummer: WO 2010/133670

(56) Entgegenhaltungen:
- DE-A1- 19 639 091
- DE-A1-102006 057 461
- DE-B- 1 192 584
- DE-C- 735 959
- DE-C1- 19 618 248
- DE-U- 1 842 769
- DE-U1- 29 611 097
- GB-A- 2 241 558
- US-A- 1 780 493

## Beschreibung

Die Erfindung betrifft einen Trommelmotor mit einem Trommelrohr und einer räumlich festen Achse im Innenraum des Trommelrohres, einen Außendeckel zum Abdecken eines Trommelrohrendes und ein Verfahren zum Montieren eines Trommelmotors.

Ein Trommelmotor weist ein Trommelrohr und eine räumlich feste Achse im Innenraum des Trommelrohres auf. Im Innenraum des Trommelrohres ist üblicherweise ein Antrieb angeordnet, der das Trommelrohr gegenüber der räumlich festen Achse antreibt, so dass das Trommelrohr um die Achse rotiert. Auch sind Trommelmotoren bekannt, die einen externen Getriebemotor zum Antreiben des Trommelrohres gegenüber der Achse aufweisen.

Trommelmotoren werden bevorzugt eingesetzt, um ein um das Trommelrohr gelegtes Gurtband in eine Bewegung zu versetzen. Eine Anordnung von mindestens einem Trommelmotor und einem um dieses geführte Gurtband dient beispielsweise als Lauf- oder Förderband.

Das Trommelrohr ist gegenüber der räumlich festen Achse drehbar gelagert. Im Inneren des Trommelrohres befindet sich üblicherweise Öl, welches der Schmierung des Lagers wie auch des beispielsweise im Inneren des Trommelrohres angeordneten Antriebsmotor dient. Die Enden des Rohres sind entsprechend mit jeweils einem Deckel verschlossen, um das Öl im Inneren des Trommelrohres zu halten.

DE 195 27 082 C2 offenbart eine Ausgestaltung eines solchen Deckels. Gemäß DE 195 27 082 C2 ist an der Innenfläche des Trommelrohres eine zylindrische Hülse stoffschlüssig angesetzt und der Deckel formschlüssig in die Hülse eingeführt. Die Anordnung des Deckels in dem Trommelrohr beziehungsweise in der Hülse kann so als letzter Montageschritt erfolgen.

Trommelmotoren werden beispielsweise in Industriebereichen eingesetzt, in denen besondere hygienische Anforderungen an den Trommelmotor gestellt sind. Entsprechende Ausgestaltungen für den Deckel sind erforderlich, der beispielsweise ein verzinkter Stahldeckel, ein eloxierter Aluminiumdeckel oder ein Deckel aus rostfreiem Stahl sein kann.

DE 296 23 889 U1 offenbart einen Deckel, der für die Verwendung in der Lebensmittelindustrie oder der Pharmaindustrie geeignet ist. Der Deckel der DE 296 23 889 U1 ist mit einer Kappe aus rostfreiem Edelstahl versehen, um den hygienischen Anforderungen gerecht zu werden, aber dasjenige Material einzusparen, welches für einen massiven Deckel aus z. B. rostfreiem Edelstahl erforderlich wäre.

Auch sind Trommelmotoren im Hygienebereich bekannt, die Blechabdeckungen aus Edelstahl an den Trommelrohrenden aufweisen.

DE 19 618 248 C1 beschreibt einen gattungsgemäßen Trommelmotor.

Die Aufgabe besteht in der Bereitstellung eines Trommelmotors, der den hygienischen Anforderungen verbessert angepasst ist.

Erfindungsgemäß wird die Aufgabe durch einen Trommelmotor entsprechende des Anspruchs 1, mit einem Trommelrohr, einer räumlich festen Achse im Innenraum des Trommelrohres, einem Innendeckel zur Aufnahme eines Lagers, um das Trommelrohr drehbar um die Achse zu lagern, und zum inneren Abdichten des Innenraumes, und einem Außendeckel zum Abdecken eines Trommelrohrendes und zum äußeren Abdichten des Innenraumes gelöst.

Dem erfindungsgemäßen Trommelmotor liegt die Idee zu Grunde, dass der Trommelmotordeckel zweiteilig ausgebildet ist. Dabei übernimmt der im Inneren des Trommelrohres liegende Innendeckel die Funktion der Lagerung und des Verhinderns, dass Öl aus dem Inneren des Trommelrohres austritt. Der Außendeckel dient dem Abdecken des Trommelrohrendes und verhindert, dass Staub, Verunreinigungen etc. aus dem Außenraum des Trommelmotors in den Innenraum eintreten können. Der Außendeckel dient bevorzugt als modularer Außendeckel, der je nach Hygieneanforderung oder Einsatzgebiet des Trommelmotors austauschbar ist, ohne das Veränderungen im Innenraum des Trommelrohrs, wie z. B. Ablass des Öles, erforderlich sind.

Ein Vorteil des erfindungsgemäßen Trommelmotors besteht darin, dass erst nach der Montage von Trommelrohr, Achse und Innendeckel entschieden werden kann, welcher Außendeckel für das Einsatzgebiet des Trommelmotors besonders geeignet ist. Um den Außendeckel auszutauschen, ist lediglich ein Lösen des Außendeckels von dem Trommelmotor erforderlich ohne dass beispielsweise Öl aus dem Inneren des Trommelrohrs auslaufen könnte. Daher kann der Außendeckel jederzeit und ohne großen Mohntageaufwand beispielsweise zu Reinigungszwecken ausgetauscht werden. Dies ist in Bezug auf Hygieneanforderungen an einen Trommelmotor besonders vorteilhaft.

Vorteilhaft kann erst nach der Motormontage entschieden werden, welche Ausführung der Trommelmotor in Bezug auf Hygiene, Korrosionsbeständigkeit, Materialwahl des bzw. der Deckel erhalten soll. Auf diese Weise wird ein besonders wartungsfreundlicher und/oder hygienischer Trommelmotor bereitgestellt.

Bevorzugt weist der Trommelmotor und/oder der Innendeckel ein Fixierungsmittel, insbesondere ein Gewinde, zum, insbesondere lösbaren, Anordnen des Außendeckels an dem Innendeckel auf. Bevorzugt ist der Außendeckel lösbar an dem Trommelmotor angeordnet bzw. fixiert. Bevorzugt erfolgt die Anordnung des Außendeckels an dem Innendeckel. Die Anordnung bzw. Fixierung des Außendeckels an dem erfindungsgemäßen Trommelmotor wird bevorzugt durch ein Fixierungsmittel erreicht. Ein solches Fixierungsmittel ist bevorzugt ein Gewinde bzw. Schraubmechanismus, ein Klemmmechanismus, ein Schnapp- oder Klippmechanismus oder dergleichen. Das Fixierungsmittel ist bevorzugt ausgestaltet, um den Außendeckel lösbar an dem erfindungsgemäßen Trommelmotor und/oder Innendeckel anzuordnen. Besonders bevorzugt ist der Außendeckel auf den Innendeckel geschraubt. Bevorzugt ist das Gewinde hierfür ist innen liegend, d.h. zwischen Innen- und Außendeckel angeordnet, und verursacht außen keine Unebenheiten bzw. Unterbrechungen (z.B. durch Schrauben) der glatten Außenkontur, was besonders vorteilhaft im Hygienebereich (z.B. keine Anhaftung von Verunreinigungen, einfache und zuverlässige Reinigung) ist. Die Reinigbarkeit der Motoren und somit die Bakterienbelastung wird erfindungsgemäß erheblich verbessert. Durch eine oder mehrere dieser bevorzugten Ausgestaltungen wird vorteilhaft erreicht, dass der Außendeckel besonders einfach und/oder lösbar an dem erfindungsgemäßen Trommelmotor angeordnet werden kann.

Bevorzugt weist der Innendeckel mindestens ein Ölloch auf. Insbesondere ist bevorzugt, dass der Innendeckel mindestens zwei Öllöcher aufweist. Das Ölloch ist ausgestaltet, um Öl in den Innenraum des Trommelrohres einzuführen und/oder um Öl aus dem Innenraum des Trommelrohres zu entfernen. Ein Nachfüllen von Öl, ein Ölwechsel, eine Ölprüfung, eine Ölstandprüfung und dergleichen kann mittels des Ölloches besonders vorteilhaft durchgeführt werden.

Bevorzugt weist das Ölloch ein Gewinde zum Aufnehmen einer Dichtschraube auf. Weiterhin ist bevorzugt, dass der erfindungsgemäße Trommelmotor eine Dichtschraube aufweist, die insbesondere in dem Ölloch dichtend verschraubt ist. Vorteilhafterweise wird durch die Ausgestaltung des Ölloches mit Gewinde beziehungsweise die Aufnahme der Dichtschraube in dem Gewinde des Ölloches erreicht, dass das Ölloch auf besonders einfache Weise geöffnet und verschlossen werden kann und zuverlässig ein Ausfließen des Öles aus dem Innenraum des Trommelrohres verhindert. Die Dichtschraube kann bei Bedarf vorteilhafterweise jederzeit leicht entfernt werden, um beispielweise Öl dem Innenraum des Trommelrohres zu entnehmen oder zuzuführen.

Bevorzugt weist der Trommelmotor ein Dichtelement auf, welches in dem Ölloch dichtend angeordnet ist. Ein Dichtelement kann beispielsweise eine Dichtschraube, oder auch ein Pfropfen, ein Dichtkeil oder ein anderes Element sein, welches ein Austreten des Öles aus dem Innenraum des Trommelrohres durch das Ölloch verhindert.

Bevorzugt weist der Außendeckel einen radialen Umfang auf, der im Wesentlichen dem radialen Umfang des Trommelrohres entspricht. Bevorzugt bildet der radiale Umfang des Außendeckels in Verbindung mit der Oberfläche des Trommelrohres eine zylindrische Oberfläche des Trommelmotors. Die zylindrische Oberfläche des Trommelmotors ist insbesondere glatt ausgestaltet, so dass ein Eindringen von Verschmutzungen in den Innenraum des Trommelmotors zwischen Trommelrohr und Außendeckel weitgehend verhindert werden kann. Auch bietet die Ausgestaltung des Außendeckels in Verbindung mit dem Trommelrohr als zylindrische Oberfläche des Trommelmotors den Vorteil, dass die Oberfläche des Trommelmotors besonders einfach und zuverlässig gereinigt werden kann.

Bevorzugt weist der Außendeckel eine glatte Oberfläche auf. Bevorzugt ist die den Innenraum des Trommelrohres verschließende äußere, das heißt dem Innenraum des Trommelrohres gegenüberliegende, Oberfläche des Außendeckels glatt ausgestaltet. Durch die glatte Ausgestaltung des Außendeckels wird eine besonders einfache Reinigung ermöglicht. Auf diese Weise wird der Trommelmotor so ausgeführt, dass sich keinerlei Vertiefungen oder Schmutztaschen im Deckelbereich des erfindungsgemäßen Trommelmotors befinden, so wie beispielsweise Schraubköpfe der Schrauben, die der konventionellen Fixierung des Deckels dienen, ohne auf die Möglichkeit des Öl und/oder Dichtungswechsels verzichten zu müssen.

Bevorzugt weist der Trommelmotor einen Außendichtring zwischen dem Außendeckel und dem Trommelrohr auf. Der Außendichtring weist den Vorteil auf, dass das Eindringen von Verschmutzungen aus dem Außenraum in den Innenraum des erfindungsgemäßen Trommelmotors vermieden werden kann. Auch verbessert der Dichtring die Möglichkeit einer Reinigung der Oberfläche des Trommelmotors, da der Dichtring verhindert, dass ein Reinigungsmittel oder eine Reinigungsflüssigkeit in das Innere des Trommelmotors eindringen kann. Bevorzugt wird der Dichtring durch Aktivieren des Fixierungsmittels aktiviert, das heißt verpresst. Bevorzugt wird der Dichtring durch Anordnen des Außendeckels an dem erfindungsgemäßen Trommelmotor aktiviert. Besonders bevorzugt erfolgt die Aktivierung des Dichtringes durch Aufschrauben des Außendeckels auf den Trommelmotor und/oder auf den Innendeckel. Vorteilhafterweise wird so erreicht, dass die Fixierung des Außendeckels an dem Trommelmotor und die äußere Abdichtung des Innenraumes gleichzeitig erfolgt.

Bevorzugt weist der Trommelmotor einen Dichtring zwischen dem Innendeckel und der Achse auf. Bevorzugt ist der Dichtring ein Simmerring. Der Dichtring dient der Abdichtung des Trommelmotorgehäuses an der Achse. Der Dichtring verhindert insbesondere ein Austreten der Flüssigkeit beziehungsweise des Öles aus dem Innenraum des Trommelrohres, das heißt, der Dichtring dient der inneren Dichtung. Bevorzugt weist der Innendeckel eine Ausnehmung auf, in der der Dichtring angeordnet ist. Mittels des Dichtringes wird der Vorteil einer besonders guten Abdichtung des Innenraumes erreicht, so dass ein Austreten von Öl an der Achse weitgehend verhindert werden kann.

Erfindungsgemäß weist das Trommelrohr auf dessen dem Innenraum gegenüberliegenden Oberfläche eine Beschichtung, insbesondere eine Gummierung, auf. Die dem Innenraum gegenüberliegende Oberfläche des Trommelrohres ist die äußere Oberfläche des Trommelrohres beziehungsweise des Trommelmotors. Je nach Einsatzgebiet des erfindungsgemäßen Trommelmotors ist die äußere insbesondere zylindrische Oberfläche des Trommelmotors ausgestaltet, um beispielsweise ein Gurtband anzutreiben. Die Friktion lässt sich durch entsprechende Auswahl der Beschichtung einstellen. Es gibt beispielsweise lebensmittelechte und öl- und fettbeständige Gummierungen und Gummierungen mit glatten oder strukturierten Oberflächen oder Führungsnuten. Bevorzugt entspricht der radiale Umfang des Außendeckels im Wesentlichen dem radialen äußeren Umfang der Beschichtung, das heißt dem radialen Umfang des erfindungsgemäßen Trommelmotors. Vorteilhaft wird durch die Aufbringung einer Beschichtung auf die Oberfläche des Trommelmotors erreicht, dass der Trommelmotor für spezielle Einsatzgebiete angepasst werden kann.

Erfindungsgemäß weist der Außendeckel einen Vorsprung zum Eingriff in die Beschichtung auf. Bevorzugt weist die Beschichtung eine Ausnehmung auf, die zum Aufnehmen des Vorsprungs des Außendeckels ausgestaltet ist. Bevorzugt weist der Außendeckel einen Ringvorsprung auf, der zum Eingriff in eine Ringnut in der Beschichtung geeignet ist. Durch das wenigstens teilweise Ineinandergreifen eines radialen Umfangsbereiches des Außendeckels in die Beschichtung wird eine besonders vorteilhafte äußere Abdichtung erreicht.

Bevorzugt weist der Trommelmotor ein Kugellager zwischen der Achse und dem Innendeckel auf. Besonders bevorzugt weist der Innendeckel eine Ausnehmung zur Aufnahme des Lagers, insbesondere des Kugellagers, auf. Besonders bevorzugt weist der Innendeckel eine Ausnehmung zur Aufnahme des Dichtringes und eine Ausnehmung zur Aufnahme des Lagers auf, so dass der Innendeckel zusammen mit dem Dichtring und dem Lager in einem Montageschritt im Inneren des Trommelrohrs angeordnet werden kann. Bevorzugt ist der Innendeckel als Abtriebsdeckel ausgestaltet, der der Lagerung vom Trommelrohr gegenüber der räumlich festen Achse dient. Bevorzugt ist der Innendeckel stoffschlüssig mit der inneren Oberfläche des Trommelrohres verbunden. Besonders bevorzugt ist der Innendeckel an der Innenoberfläche des Trommelrohres verklebt und/oder verschweißt. Durch die Anordnung eines Kugellagers zwischen der Achse und dem Innendeckel wird vorteilhaft erreicht, dass der Innendeckel die Funktion der Lagerung des Trommelrohres zu der räumlich festen Achse übernimmt.

Bevorzugt weist der Trommelmotor eine Dichtlippe zwischen dem Außendeckel und der Achse auf. Bevorzugt weist die Dichtlippe wenigstens einen inneren radialen Bereich auf, der um den äußeren radialen Umfang der Achse drehbar ist. Bevorzugt ist die Dichtlippe ausgestaltet, um den Dichtring nach außen abzudichten. Bevorzugt ist die Dichtlippe zum Gleiten um die Achse während eines Rotierens des Trommelrohres um die Achse ausgestaltet. Die Dichtlippe weist den Vorteil auf, dass die äußere Abdichtung zur Verhinderung eines Eindringens von Verschmutzungen aus dem Außenraum in den Innenraum des erfindungsgemäßen Trommelmotors weiter verbessert werden kann.

Bevorzugt ist der Außendeckel sowohl zum Innendeckel als auch zur Achse bzw. Welle als auch zum Trommelrohr spaltfrei abgedichtet. Die Abdichtung zwischen Außendeckel und Innendeckel erfolgt bevorzugt durch das Fixierungsmittel, insbesondere das Gewinde, bzw. durch die Verschraubung des Außendeckels auf den Innendeckel. Die Abdichtung zwischen Außendeckel und Achse bzw. Welle erfolgt bevorzugt durch die Dichtlippe. Bevorzugt ist die Abdichtung zwischen Außendeckel und Trommelrohr der Außendichtring und/oder der Vorsprung des Außendeckels in die optionale Beschichtung. Die vorteilhafte spaltfreie Abdichtung wird durch die definierte Lage des Außendeckels aufgrund der geschraubten Konstruktion und somit durch eine definierte Pressung der Dichtungen, insbesondere Dichtlippe und Außendichtung, gewährleistet. Die Reinigbarkeit der Motoren und somit die Bakterienbelastung wird erfindungsgemäß erheblich verbessert.

Bevorzugt ist die Achse eine Hohlwelle. Eine solche Ausgestaltung ist besonders vorteilhaft, um Versorgungseinheiten, wie z.B. Kabel, von dem Außenraum des Trommelmotors zu dem Motor im Innenraum des Trommelmotors zu führen.

In einem weiteren Aspekt bezieht sich die Erfindung auf einen Trommelmotor mit einem Trommelrohr, einer räumlich festen Achse im Innenraum des Trommelrohres, einem Innendeckel zur Aufnahme eines Lagers, um das Trommelrohr drehbar um die Achse zu lagern, und zum inneren Abdichten des Innenraumes, und Mitteln zum Aufnehmen eines erfindungsgemäßen Außendeckels.

In einem weiteren Aspekt bezieht sich die Erfindung auf einen erfindungsgemäßen Außendeckel zur Verwendung in einem erfindungsgemäßen Trommelmotor.

In einem weiteren Aspekt bezieht sich die Erfindung auf ein Verfahren zum Montieren eines Trommelmotors, welcher ein Trommelrohr und eine räumlich feste Achse im Innenraum des Trommelrohrs aufweist, wobei das Verfahren die Schritte aufweist: Fixieren eines Innendeckels zwischen dem Trommelrohr und der Achse, wobei der Innendeckel zur Aufnahme eines Lagers, um das Trommelrohr drehbar um die Achse zu lagern, und zum inneren Abdichten des Innenraumes ausgestaltet ist, wobei der Innendeckel ein Ölloch aufweist, Einfüllen von Öl in den Innenraum des Trommelrohres durch das Ölloch, Abdichten des Ölloches, Fixieren eines Außendeckels an dem Trommelmotor, wobei der Außendeckel zum Abdecken eines Trommelrohrendes und zum äußeren Abdichten des Innenraumes des Trommelrohrs ausgestaltet ist.

Im Folgenden werden Ausführungsformen der Erfindung unter Bezugnahme auf die Figuren erläutert, wobei:
Fig. 1 eine äußere Gesamtansicht eines Trommelmotors zeigt;
Fig. 2 einen Querschnitt eines Endbereichs eines erfindungsgemäßen Trommelmotors zeigt;
Fig. 3 eine Querschnittansicht eines Endbereiches eines erfindungsgemäßen Trommelmotors zeigt;
Fig. 4 einen Querschnitt eines Endbereiches eines erfindungsgemäßen Trommelmotors zeigt;
Fig. 5 eine Querschnittansicht eines Endbereiches eines erfindungsgemäßen Trommelmotors zeigt;
Fig. 6 eine Detailansicht des Trommelmotors der Fig. 4 zeigt;
Fig. 7 einen Querschnitt eines Endbereiches eines erfindungsgemäßen Trommelmotors zeigt;
Fig. 8 eine Querschnittansicht eines Endbereiches eines erfindungsgemäßen Trommelmotors zeigt;
Fig. 9 eine Detailansicht des Trommelmotors der Fig. 7 zeigt; und
Fig. 10 eine Innenansicht des Trommelmotors der Fig. 7 zeigt.

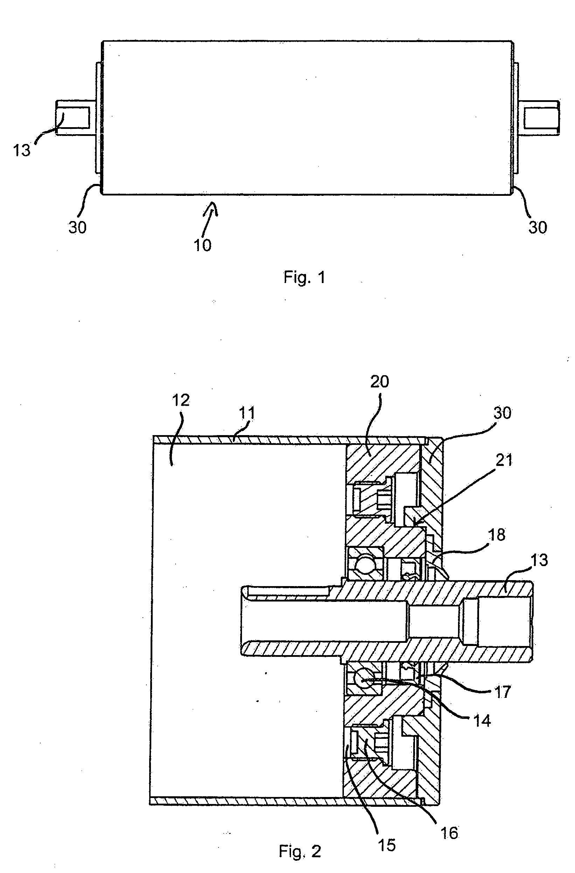

Figur 1 zeigt eine Außenansicht eines Trommelmotors 10, in dessen Inneren eine räumlich feste Achse 13 angeordnet ist. An den beiden Enden des Trommelmotors 10 sind Außendeckel 30 angeordnet. Es ist jedoch auch möglich, dass der erfindungsgemäße Außendeckel 30 nur an einem Ende eines Trommelmotors 10 angeordnet ist. Im Inneren des Trommelmotors 10 ist beispielsweise ein Getriebe angeordnet, dessen Bewegung in eine Bewegung des Trommelrohres 11 gegenüber der raumfesten Achse umgesetzt wird.

Figuren 2 bis 6 zeigen Ausführungsformen von ungummierten Rohren 11 mit Dichtung.

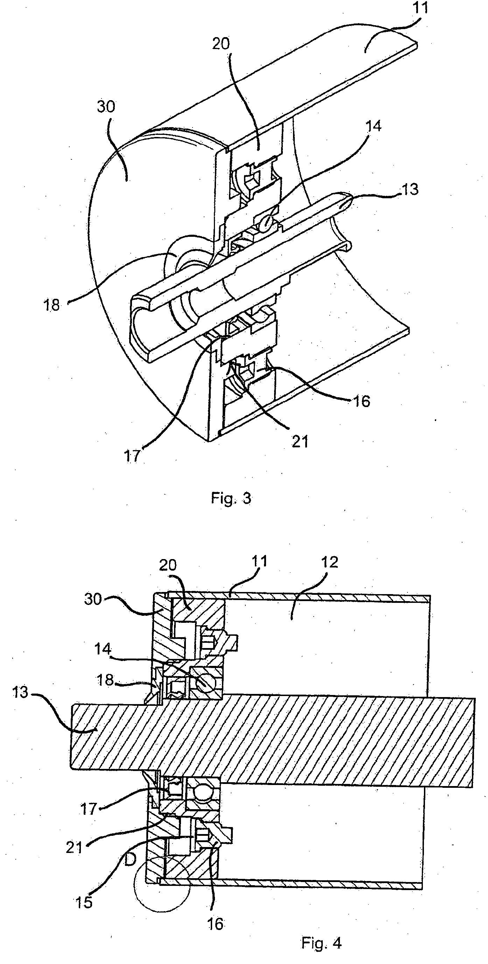

Figuren 2 und 3 zeigen eine erste Ausführungsform eines erfindungsgemäßen Trommelmotors. Der erfindungsgemäße Trommelmotor weist ein Trommelrohr 11 auf, welches einen Innenraum 12 des Trommelrohres 11 bzw. des Trommelmotors 10 umgibt. Im Inneren des Trommelrohres 11 ist eine räumlich feste Achse 13 angeordnet, die bevorzugt als Hohlwelle ausgebildet ist, wie in Figuren 2 und 3 gezeigt ist. Zwischen dem Trommelrohr 11 und der Hohlwelle 13 ist der erfindungsgemäße zweiteilige Deckel angeordnet, der einen Innendeckel 20 und einen Außendeckel 30 aufweist. Innendeckel 20 und Außendeckel 30 sind aneinander angeordnet. Der Außendeckel 30 ist in dem Ausführungsbeispiel der Figuren 2 und 3 mittels des Gewindes 21 auf den Innendeckel 20 geschraubt. Alternativ oder zusätzlich kann der Außendeckel 30 auf das Trommelrohr 11 geschraubt sein. Anstelle einer Verschraubung von Außendeckel 30 mit Innendeckel 20 und/oder Trommelrohr 11 ist eine Verklemmung, Schnapphalterung, Klipphalterung oder ein anderer Fixierungsmechanismus möglich.

Der Innendeckel 20 lagert das Trommelrohr 11 mittels eines Kugellagers 14 gegenüber der Hohlwelle 13. Das Trommelrohr 11 ist mittels des Kugellagers 14 drehbar um die räumlich feste Hohlwelle 13 angeordnet. Der Innendeckel 20 dient dabei als Abtriebsdeckel zur Übertragung des Abtriebs des (nicht gezeigten) Antriebes auf das Trommelrohr 11. Der Innendeckel 20 ist fest mit dem Trommelrohr, 11 verbunden, um die Rotation des Innendeckels 20 in eine Rotation des Trommelrohres 11 zu übersetzen. Der Innendeckel 20 ist beispielsweise mit der Innenoberfläche des Trommelrohres 11 verklebt oder verschweißt.

Der Innendeckel 20 weist ferner eine Ausnehmung zur Aufnahme eines Dichtringes 17 als Weichdichtung auf. In dem Ausführungsbeispiel der Figuren 2 und 3 ist der Dichtring als Simmerring 17 ausgestaltet. Der Simmerring 17 dient der inneren Dichtung, d.h. er verhindert ein Austreten einer im Inneren des Trommelrohres 11 angeordneten Flüssigkeit.

Der Innendeckel 20 der Ausführungsform der Figuren 2 und 3 weist zwei Öllöcher 15 auf. Die Öllöcher 15 sind mit einem Innengewinde versehen, in welches Dichtschrauben 16 dichtend eingeschraubt sind. Bei der Montage des erfindungsgemäßen Trommelmotors 10 wird der Innendeckel 20 zwischen Trommelrohr 11 und Hohlwelle 13 fixiert, danach wird die Flüssigkeit, insbesondere Öl, in den Innenraum 12 durch die Öllöcher 15 eingeführt, danach werden die Öllöcher 15 durch Fixieren der Dichtschrauben 16 verschlossen, und schließlich wird der Außendeckel 30 an dem Trommelrohrende angeordnet.

Zwischen Außendeckel 30 und Hohlwelle 13 ist in der Ausführungsform der Figuren 2 und 3 eine Dichtlippe 18 angeordnet, die der äußeren Dichtung dient und ein Eindringen von Verschmutzungen von dem Außenraum in den Innenraum 12 verhindert. Eine Dichtung zwischen Außendeckel 30 und Trommelrohr 11 wird mittels eines Dichtringes 31 erreicht, wie im Folgenden weiter erläutert wird.

Fig. 4 bis 6 zeigen eine weitere Ausführungsform eines erfindungsgemäßen Trommelmotors 10. In der Ausführungsform der Fig. 4 bis 6 ist die Achse massiv und nicht als Hohlwelle wie in Figuren 2 und 3 ausgestaltet. Eine solche Ausgestaltung kann vorteilhaft sein, wenn der Antrieb beispielsweise im Außenraum des Trommelmotors 10 angeordnet ist und daher keine Zuführung von Versorgungsleitungen durch die Hohlwelle erforderlich ist. Auch weist die zylindrische Oberfläche der Achse 13 ringförmige Stufen auf, die ein Verschieben des Trommelrohres und in dessen Inneren angeordneten Komponenten gegenüber der Achse 13 verhindern. Die Ausführungsform der Figuren 4 bis 6 zeigen ein Fixierelement 16, welches beispielsweise als Pfropfen ausgebildet ist, um die Öllöcher 15 zu verschließen. Innendeckel 20 und Außendeckel 30 sind mittels eines Gewindes 21 miteinander verbindbar. Der Simmerring 17 verhindert ein Austreten von Öl aus dem Innenraum 12. Die Dichtlippe 18 verhindert ein Eintreten von Verschmutzungen in den Innenraum 12.

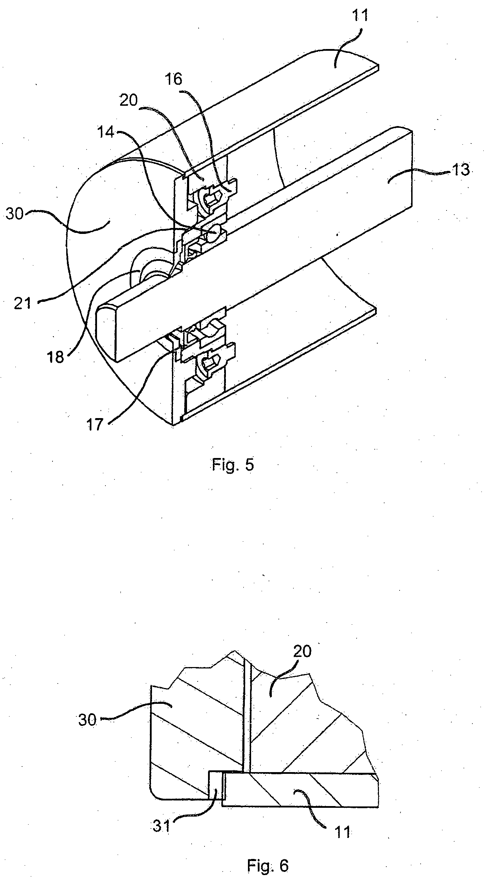

Fig. 6 zeigt eine Detailansicht des Bereiches D der Fig. 4. Die Ausführungsform der Figuren 2 und 3 ist in dem Übergangsbereich zwischen Trommelrohr 11 und Außendeckel 30 ähnlich ausgebildet wie in Fig. 6 gezeigt ist. In Fig. 6 ist Innendeckel 20 gezeigt, der an der Innenoberfläche des Trommelrohres 11 insbesondere stoffschlüssig fixiert ist. An Trommelrohr 11 und Innendeckel 20 ist Außendeckel 30 angeordnet. Eine äußere Dichtung zwischen Außendeckel 30 und Trommelrohr 11 und/oder Innendeckel 20 wird mittels eines Außendichtringes 31 erreicht. Die Dichtung des Außendichtringes 31 wird aktiviert, indem Außendeckel 30 an Trommelrohr 11 angeordnet wird, wobei die Dichtwirkung des Außendichtringes 31 je größer wird desto geringer der Abstand zwischen Außendeckel 30 und Trommelrohr 11 wird. Der Abstand zwischen Außendeckel 30 und Trommelrohr 11 wird bevorzugt mit Hilfe des Fixierungsmittel 21 eingestellt: je enger der Außendeckel 30 mit Trommelrohr 11 bzw. Innendeckel 20 beispielsweise verschraubt wird, desto größer ist die Dichtwirkung des Außendichtringes 31.

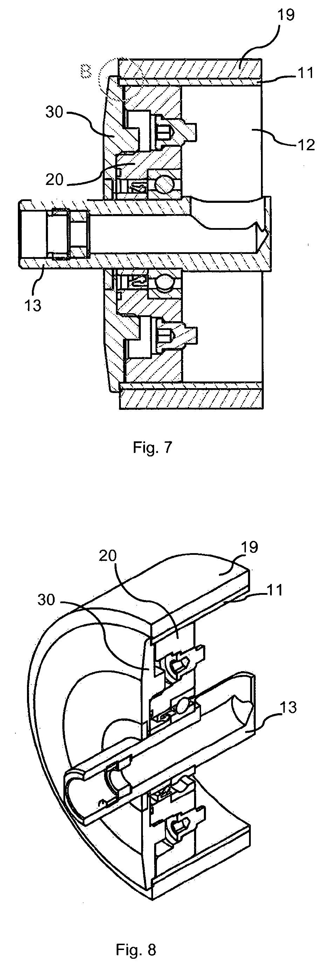

Figuren 7 bis 10 zeigen eine weitere Ausführungsform eines erfindungsgemäßen Trommelmotors 10 für ein gummiertes Rohr 11 mit Schnittkante. Der Außendeckel 30 für gummierte Trommelrohre 11 erfüllt die Abdichtung zum Trommelrohr 11 durch eine definiert platzierte Dichtkante wie im Folgenden unter Bezugnahme auf Figuren 7 bis 9 erläutert ist. Im Übrigen sind bzw. können die Merkmale der Ausführungsform der Figuren 7 bis 10 identisch zu denen des ungummierten Trommelrohres der Figuren 1 bis 6 sein.

Der Trommelmotor 10 der Figuren 7 bis 10 weist ein Trommelrohr 11 und eine Hohlwelle 13 auf, die raumfest im Inneren des Trommelrohres 11 angeordnet ist. Um die Hohlwelle 13 ist ein Lager und ein Dichtring angeordnet. Zwischen Lager, Dichtring und der inneren Oberfläche des Trommelrohres 11 ist Innendeckel 20 angeordnet. Außendeckel 30 ist auf der Oberfläche des Innendeckels 20 aufgeschraubt. Die Ausgestaltung von Öllöchern 15 und Dichtelement 16 kann gemäß der oben erläuterten Ausführungsformen oder anderer Ausführungsformen ausgestaltet sein.

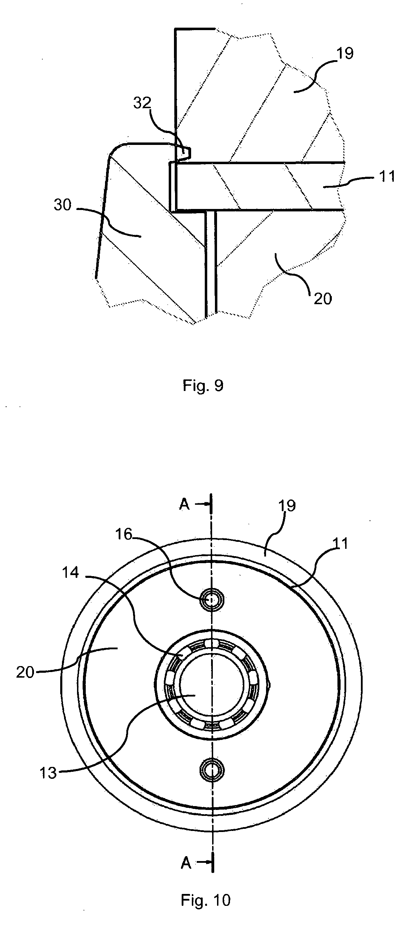

Auf der äußeren Oberfläche des Trommelrohres 11 ist eine Beschichtung 19 angeordnet. Die Beschichtung 19 ist insbesondere eine Gummierung und dient der Einstellung der Friktion je nach Einsatzgebiet des Trommelmotors 10. Die Außendichtung zwischen Außendeckel 30 und Trommelrohr 11 beziehungsweise Gummierung 19 erfolgt in der Ausführungsform der Figuren 7 bis 10 nicht oder nicht allein durch einen Dichtring, sondern durch einen Vorsprung 32, wie er in Figur 9, welche eine Detailansicht des Bereiches B der Figur 7 zeigt, illustriert ist.

Figur 9 zeigt Trommelrohr 11, an dessen innerer Oberfläche der Innendeckel 20 stoffschlüssig fixiert ist. Auf der äußeren Oberfläche des Trommelrohres, 11 ist Gummierung 19 angeordnet. Außendeckel 30 ist an dem Innendeckel 20 und Trommelrohr 11 angeordnet, um das Trommelrohrende abzudecken und den Innenraum 12 nach Außen abzudichten. Die äußere Abdichtung wird durch Vorsprung 32 erreicht, der in Gummierung 19 eingreift bzw. in einer Ausnehmung der Gummierung 19 ausgenommen wird. Auf die Verwendung eines Dichtringes 21 kann in der Ausführungsform der Figuren 7 bis 10 verzichtet werden.

Figur 10 zeigt eine Innenansicht des Trommelmotors der Figuren 7 bis 9, zu der Figur 7 den Schnitt entlang A-A illustriert. In Figur 10 ist die radiale Anordnung von Welle 13, Kugellager 14, Innendeckel 20 und Trommelrohr 11 zu sehen. Außerhalb des Trommelrohres 11 ist die Beschichtung 19 angeordnet. In der in Figur 10 dargestellten Ansicht sind die Dichtelemente 16 zu erkennen, die den Öleinlass bzw. -durchlass zu dem Innenraum 12 des Trommelmotors abdichten.

Die Erfindung ermöglicht es, den Trommelmotor 10 so auszuführen, dass der Außendeckel 30 kundenspezifisch und anforderungsspezifisch in Form und Material ausgeführt und nachträglich montiert werden kann. Insbesondere ermöglicht es der erfindungsgemäße Trommelmotor 10, die Oberfläche des Außendeckels 30 vor der Montage des Trommelmotors 10 oder nach der Montage des Trommelmotors 10 zum eigenen oder Kundenbranding zu nutzen. Besonderen Erfordernissen auch an Ästhetik kann so besonders einfach nachgekommen werden. Da der Außendeckel 30 der Trommelrohrendabdeckung und äußeren Dichtung dient, kann er nahezu aus jedem Material gefertigt sein, wie z.B. Edelstahl, Kunststoff, Gummi et cetera. Erfindungsgemäß wird so ein hygienischer Trommelmotordeckel mit Zentralverschluss und Außenmaterialwahl nach der Montage zur Verfügung gestellt.

## Patentansprüche

1. Trommelmotor (10) mit
einem Trommelrohr (11),
einer räumlich festen Achse (13) im Innenraum (12) des Trommelrohres (11), einem Innendeckel (20) zur Aufnahme eines Lagers (14), um das Trommelrohr (11) drehbar um die Achse (13) zu lagern, und zum inneren Abdichten des Innenraumes (12), und
einem Außendeckel (30) zum Abdecken eines Trommelrohrendes und zum äußeren Abdichten des Innenraumes (12), **dadurch gekennzeichnet, dass**
das Trommelrohr (11) auf dessen dem Innenraum (12) gegenüberliegenden Oberfläche eine Beschichtung (19) aufweist und
dass der Außendeckel (30) einen Vorsprung (32) zum Eingriff in die Beschichtung (19) aufweist.

2. Trommelmotor (10) nach Anspruch 1, wobei der Trommelmotor (10) und/oder der Innendeckel (20) ein Fixierungsmittel (21), insbesondere ein Gewinde, zum, insbesondere lösbaren, Anordnen des Außendeckels (30) an dem Innendeckel (20) aufweist.

3. Trommelmotor (10) nach Anspruch 1 oder 2, wobei der Innendeckel (20) mindestens ein Ölloch (15) aufweist.

4. Trommelmotor (10) nach Anspruch 3, wobei das Ölloch (15) ein Gewinde zum Aufnehmen einer Dichtschraube (16) aufweist.

5. Trommelmotor (10) nach Anspruch 3 oder 4, wobei der Trommelmotor (10) ein Dichtelement (16) aufweist, das in dem Ölloch (15) dichtend angeordnet ist.

6. Trommelmotor (10) nach einem der vorstehenden Ansprüche, wobei der Außendeckel (30) einen radialen Umfang aufweist, der im wesentlichem dem radialen Umfang des Trommelrohres (11) entspricht.

7. Trommelmotor (10) nach einem der vorstehenden Ansprüche, wobei der Außendeckel (30) eine glatte Oberfläche aufweist.

8. Trommelmotor (10) nach einem der vorstehenden Ansprüche, wobei der Trommelmotor (10) einen Außendichtring (31) zwischen dem Außendeckel (30) und dem Trommelrohr (11) aufweist.

9. Trommelmotor (10) nach einem der vorstehenden Ansprüche, wobei der Trommelmotor (10) einen Dichtring (17) zwischen dem Innendeckel (20) und der Achse (13) aufweist.

10. Trommelmotor (10) nach einem der vorstehenden Ansprüche, wobei die Beschichtung (19) rung (19) ist.

11. Trommelmotor (10) nach Anspruch 10, wobei der Vorsprung (32) in die Gummierung (19) eingreift.

12. Trommelmotor (10) nach einem der vorstehenden Ansprüche, wobei der Trommelmotor (10) ein Kugellager (14) zwischen der Achse (13) und dem Innendeckel (20) aufweist.

13. Trommelmotor (10) nach einem der vorstehenden Ansprüche, wobei der Trommelmotor (10) eine Dichtlippe (18) zwischen dem Außendeckel (30) und der Achse (13) aufweist.

14. Trommelmotor (10) nach einem der vorstehenden Ansprüche, wobei die Achse (13) eine Hohlwelle ist.

15. Verfahren zum Montieren eines Trommelmotors (10), welcher ein Trommelrohr (11) und eine räumlich feste Achse (13) im Innenraum des Trommelrohres (11) aufweist, mit den Schritten:
Fixieren eines Innendeckels (20) zwischen dem Trommelrohr (11) und der Achse (13), wobei der Innendeckel (20) zur Aufnahme eines Lagers (14), um das Trommelrohr (11) drehbar um die Achse (13) zu lagern, und zum inneren Abdichten des Innenraumes (12) ausgestaltet ist, wobei der Innendeckel (20) ein Ölloch (15) aufweist,
Einfüllen von Öl in den Innenraum (12) des Trommelrohres durch das Ölloch (15),
Abdichten des Ölloches (15), und
Fixieren eines Außendeckels (30) an dem Trommelmotor (10), wobei der Außendeckel (30) zum Abdecken eines Trommelrohrendes und zum äußeren Abdichten des Innenraumes (12) des Trommelrohres (11) ausgestaltet ist,
wobei das Trommelrohr (11) auf dessen dem Innenraum (12) gegenüberliegenden Oberfläche eine Beschichtung (19) aufweist und
wobei der Außendeckel (30) einen Vorsprung (32) zum Eingriff in die Beschichtung (19) aufweist.

16. Verfahren nach Anspruch 15, wobei der Schritt des Fixierens des Außendeckels (30) den Schritt eines Fixierens des Außendeckels (30) an dem Innendeckel (20) aufweist.

## Claims

1. Drum motor (10), having
a drum pipe (11),
a spatially fixed axle (13) in the inner space (12) of the drum pipe (11),
an inner cover (20) for receiving a bearing (14) in order to rotatably support the drum pipe (11) about the axle (13) and for internally sealing the inner space (12), and
an outer cover (30) for covering a drum pipe end and for externally sealing the inner space (12), **characterised in that**
the drum pipe (11) has a coating (19) on the surface thereof opposite the inner space (12), and
**in that** the outer cover (30) has a projection (32) for engagement in the coating (19).

2. Drum motor (10) according to Claim 1, wherein the drum motor (10) and/or the inner cover (20) has a fixing means (21), in particular a thread, for the in particular releasable arrangement of the outer cover (30) on the inner cover (20).

3. Drum pipe (10) according to Claim 1 or 2, wherein the inner cover (20) has at least one oil hole (15).

4. Drum motor (10) according to Claim 3, wherein the oil hole (15) has a thread for receiving a sealing screw (16).

5. Drum motor (10) according to Claim 3 or 4, wherein the drum motor (10) has a sealing element (16) which is arranged in the oil hole (15) in a sealing manner.

6. Drum motor (10) according to any one of the preceding claims, wherein the outer cover (30) has a radial periphery which substantially corresponds to the radial periphery of the drum pipe (11).

7. Drum motor (10) according to any one of the preceding claims, wherein the outer cover (30) has a smooth surface.

8. Drum motor (10) according to any one of the preceding claims, wherein the drum motor (10) has an outer sealing ring (31) between the outer cover (30) and the drum pipe (11).

9. Drum motor (10) according to any one of the preceding claims, wherein the drum motor (10) has a sealing ring (17) between the inner cover (20) and the axle (13).

10. Drum motor (10) according to any one of the preceding claims, wherein the coating (19) is a rubber coating (19).

11. Drum motor (10) according to Claim 10, wherein the projection (32) engages in the rubber coating (19).

12. Drum motor (10) according to any one of the preceding claims, wherein the drum motor (10) has a ball bearing (14) between the axle (13) and the inner cover (20).

13. Drum motor (10) according to any one of the preceding claims, wherein the drum motor (10) has a sealing lip (18) between the outer cover (30) and the axle (13).

14. Drum motor (10) according to any one of the preceding claims, wherein the axle (13) is a hollow shaft.

15. Method for mounting a drum motor (10), which has a drum pipe (11) and a spatially fixed axle (13) in the inner space of the drum pipe (11), having the steps of:
fixing an inner cover (20) between the drum pipe (11) and the axle (13), wherein the inner cover (20) is constructed for receiving a bearing (14) in order to rotatably support the drum pipe (11) about the axle (13) and for internally sealing the inner space (12), wherein the inner cover (20) has an oil hole (15),
introducing oil into the inner space (12) of the drum pipe through the oil hole (15),
sealing the oil hole (15), and
fixing an outer cover (30) to the drum motor (10), wherein the outer cover (30) is constructed for covering a drum pipe end and for externally sealing the inner space (12) of the drum pipe (11),
wherein the drum pipe (11) has a coating (19) on the surface thereof opposite the inner space (12), and
wherein the outer cover (30) has a projection (32) for engagement in the coating (19).

16. Method according to Claim 15, wherein the step of fixing the outer cover (30) has the step of fixing the outer cover (30) to the inner cover (20).

## Revendications

1. Moteur à tambour (10) avec
un tube de tambour (11),
un axe (13) fixe dans l'espace à l'intérieur (12) du tube de tambour (11),
un couvercle interne (20) pour le logement d'un palier (14), afin de loger le tube de tambour de manière rotative autour de l'axe (13) et pour l'étanchéification interne de l'intérieur (12) et
un couvercle externe (30) pour le recouvrement d'une extrémité du tube de tambour et pour l'étanchéification externe de l'intérieur (12)
**caractérisé en ce que**
le tube de tambour (11) comprend, sur sa surface opposée à l'intérieur (12), un revêtement (19) et
**en ce que** le couvercle externe (30) comprend une saillie (32) pour l'emboîtement dans le revêtement (19).

2. Moteur à tambour (10) selon la revendication 1, dans lequel le moteur à tambour (10) et/ou le couvercle interne (20) comprend un moyen de fixation (21), plus particulièrement un filetage, pour la disposition, plus particulièrement amovible, du couvercle externe (30) sur le couvercle interne (20).

3. Moteur à tambour (10) selon la revendication 1 ou 2, dans lequel le couvercle interne (20) comprend au moins un trou de lubrification (15).

4. Moteur à tambour (10) selon la revendication 3, dans lequel le trou de lubrification (15) comprend un filetage pour le logement d'une vis d'étanchéité (16).

5. Moteur à tambour (10) selon la revendication 3 ou 4, dans lequel le moteur à tambour (10) comprend un élément d'étanchéité (16) qui est disposé de manière étanche dans le trou de lubrification (15).

6. Moteur à tambour (10) selon l'une des revendications précédentes, dans lequel le couvercle externe (30) présente une périphérie radiale, qui correspond globalement à la périphérie radiale du tube de tambour (11).

7. Moteur à tambour (10) selon l'une des revendications précédentes, dans lequel le couvercle externe (30) présente une surface lisse.

8. Moteur à tambour (10) selon l'une des revendications précédentes, dans lequel le moteur à tambour (10) comprend une bague d'étanchéité externe (31) entre le couvercle externe (30) et le tube de tambour (11).

9. Moteur à tambour (10) selon l'une des revendications précédentes, dans lequel le moteur à tambour (10) comprend une bague d'étanchéité (17) entre le couvercle interne (20) et l'axe (13).

10. Moteur à tambour (10) selon l'une des revendications précédentes, dans lequel le revêtement (19) est un enrobage de caoutchouc (19).

11. Moteur à tambour (10) selon la revendication 10, dans lequel la saillie (32) s'emboîte dans l'enrobage de caoutchouc (19).

12. Moteur à tambour (10) selon l'une des revendications précédentes, dans lequel le moteur à tambour (10) comprend un roulement à billes (14) entre l'axe (13) et le couvercle interne (20).

13. Moteur à tambour (10) selon l'une des revendications précédentes, dans lequel le moteur à tambour (10) comprend une lèvre d'étanchéité (18) entre le couvercle externe (30) et l'axe (13).

14. Moteur à tambour (10) selon l'une des revendications précédentes, dans lequel l'axe (13) est un arbre creux.

15. Procédé pour le montage d'un moteur à tambour (10), qui comprend un tube de tambour (11) et un axe (13), fixe dans l'espace, à l'intérieur du tube de tambour (11), comprenant les étapes suivantes :
- la fixation d'un couvercle interne (20) entre le tube de tambour (11) et l'axe (13), le couvercle interne (20) étant conçu pour le logement d'un palier (14), afin de loger le tube de tambour (11) de manière rotative autour de l'axe (13), et pour fétanchéification interne de l'intérieur (12), le couvercle interne (20) comprenant un trou de lubrification (15),
- l'introduction d'huile à l'intérieur (12) du tube de tambour à travers le trou de lubrification (15),
- l'étanchéification du trou de lubrification (15), et
- la fixation d'un couvercle externe (30) au moteur à tambour (10), le couvercle externe (30) étant conçu pour recouvrir une extrémité du tube de tambour et pour l'étanchéification externe de l'intérieur (12) du tube de tambour (11),
le tube de tambour (11) comprenant un revêtement (19) sur sa surface opposée à l'intérieur (12), et
le couvercle externe (30) comprenant une saillie (32) pour l'emboîtement dans le revêtement (19).

16. Procédé selon la revendication 15, dans lequel l'étape de fixation du couvercle externe (30) comprend l'étape de fixation du couvercle externe (30) au couvercle interne (20).
